# EUROPÄISCHE PATENTANMELDUNG

(11) **EP 1 629 746 A2**
(43) Veröffentlichungstag der Anmeldung: **01.03.2006**
(21) Anmeldenummer: 05017172.7
(22) Anmeldetag: 06.08.2005
(51) Int. Cl.: A47B 96/00, H02G 3/04

(54) **Versorgungseinheit mit ansetzbaren Möbelelementen**

(30) Priorität: 25.08.2004 DE 202004013265 U
(71) Anmelder: TRILUX-LENZE GmbH + Co. KG, 59759 Arnsberg (DE)
(72) Erfinder: Lehrich, Karl, 59757 Arnsberg (DE)
(74) Vertreter: Bobzien, Hans Christoph

(57) **Zusammenfassung**

Die Erfindung betrifft eine Versorgungseinheit mit zwei vertikal zueinander beabstandeten Versorgungskanälen (10, 20) zur Medien- und Energieführung, die Anschlusselemente aufnehmen und zwischen sich eine Zwischenraum aufspannen, und mindestens einem in dem Zwischenraum angeordneten Möbelelement. Zur einfachen und schnellen Anpassung an individuelle Wünsche von Patienten wird vorgeschlagen, dass verschiedene Möbelelemente modular in dem Zwischenraum lösbar anordenbar sind.

## Beschreibung

Die Erfindung betrifft eine Versorgungseinheit mit zwei vertikal beabstandeten Versorgungskanälen zur Medien- und Energieführung, die Anschlusselemente aufnehmen, und zwischen sich einen Zwischenraum aufspannen, und mindestens einem in dem Zwischenraum angeordneten Möbelelement. Die Anschlusselemente können Steckdosen, Datendosen, Gaskupplungen und dergleichen umfassen, die an verschiedenen Stellen in den Versorgungskanälen anordenbar sind, um die Medien bedarfsgerecht an den jeweiligen Entnahmepunkt führen zu können. Die Leitungen zur Speisung der Anschlusselemente werden innerhalb der Versorgungskanäle geführt; an der Schnittstelle zwischen dem Versorgungskanal und der Wand gehen die Leitungen aus dem Versorgungskanal in die Wand, die Zwischendecke oder eine Abkofferung über.

Eine derartige Versorgungseinheit ist beispielsweise aus der DE 195 14 590 bekannt. Das Möbelelement ist dort als Arbeitsplatz ausgebildet, der sich als Arbeitsplatte zwischen den Versorgungskanälen aufspannt. Dieses Möbelelement ist bei dieser bekannten Versorgungseinheit fest montiert und somit schwer umrüstbar. Moderne Krankenhausausstattungen erfordern zunehmend eine patientenindividuelle Anpassung und flexible Gestaltungsmöglichkeiten, um die Versorgungseinheit an verschiedene Pflegebereiche anzupassen. Dieses ist mit bekannten Versorgungseinheiten bislang nicht möglich.

Demzufolge liegt der Erfindung die Aufgabe zugrunde, die bekannte Versorgungseinheit derart weiter zu entwickeln, dass diese einfach und schnell patientenindividuell anpassbar ist.

Diese Aufgabe wird erfindungsgemäß dadurch gelöst, dass verschiedene Möbelelemente modular in dem Zwischenraum lösbar anordnenbar sind. Demgemäß werden die Möbelelemente als Modulelemente ausgestaltet, die beliebig mit den Versorgungseinheiten kombinierbar sind, um unterschiedliche Eindrücke zu erwecken und Aufbauten zu realisieren. Die Verbindungstechnik zwischen den Versorgungskanälen und den Möbelelementen ist dabei zweckmäßigerweise einfach zugänglich, ohne dass die Versorgungseinheit demontiert werden muss.

Üblicherweise bestehen die Versorgungskanäle aus stranggepressten Aluminiumprofilen mit einer Materialstärke von 2 mm oder mehr. Bei einer Weiterentwicklung kann vorgesehen sein, dass die Versorgungskanäle aus Profilelementen modular zusammensetzbar sind, um einfach verschiedene Geometrien der Versorgungskanäle realisieren zu können. An den Stoßstellen der Profilsegmente können beispielsweise Nut- Feder-Verbindungen ausgebildet sein oder Zentriereingriffe, die sich gegenseitig in Einbaulage hintergreifen.

Bei einer besonders bevorzugten Ausführungsform weisen die Versorgungskanäle jeweils mindestens einen Schraubkanal auf, in den die Möbelelemente an beliebigen Stellen entlang der gesamten vertikalen Erstreckungsrichtung des Versorgungskanals eingeschraubt werden können. Ein solcher Schraubkanal besteht aus einer sich vertikal erstreckenden, U-förmigen Ausnehmung mit entlang der Quererstreckungsrichtung versetzt angeordneten nach innen ragenden Vorsprüngen, die als Gewinde für die Schrauben dienen. Diese Ausbildung ist mit dem Vorteil verbunden, dass die Möbelelemente beliebig an den Versorgungskanälen positionierbar sind, ohne an ein vorgegebenes Rastermaß gebunden zu sein.

Bei einer Versorgungseinheit mit mindestens einem vertikal verlaufend an einem Untergrund angeordneten Versorgungskanal zur Medien- und/oder Energieführung, der Anschlusselemente aufnimmt, kann dieser Schraubkanal auch dazu herangezogen werden, um ein Schwenkelement an dem Versorgungskanal zu befestigen. Ein derartiges Schwenkelement kann beispielsweise aus einem an dem Versorgungskanal befestigbaren Flansch bestehen, in den ein Steg drehbar einsetzbar ist.

Das Schwenkelement kann beispielsweise als Doppel-Schwenker mit einem oberen und unteren Schwenkelement ausgestaltet sein, zwischen denen sich eine Stange erstreckt, um einen Geräteträger für medizinische Versorgungsgeräte auszubilden.

Bei einer alternativen Ausführungsform kann das Schwenkelement als Infusionsflaschenhalter mit einer ausklappbaren Stange ausgebildet sein. Eine weitere Alternative sieht vor, das Schwenkelement als Geräteschiene auszubilden.

Die Erfindung wird nachfolgend anhand von bevorzugten Ausführungsformen beschrieben, wobei auf die beigefügten Zeichnungen Bezug genommen wird. In diesen zeigen:
- Fig. 1: eine Frontansicht einer ersten Ausführungsform der erfindungsgemäßen Versorgungseinheit,
- Fig. 2: eine Seitenansicht der Versorgungseinheit gemäß Figur 1,
- Fig. 3: eine Frontansicht einer alternativen Ausführungsform der erfindungsgemäßen Versorgungseinheit,
- Fig. 4: eine Seitenansicht der Versorgungseinheit gemäß Figur 3,

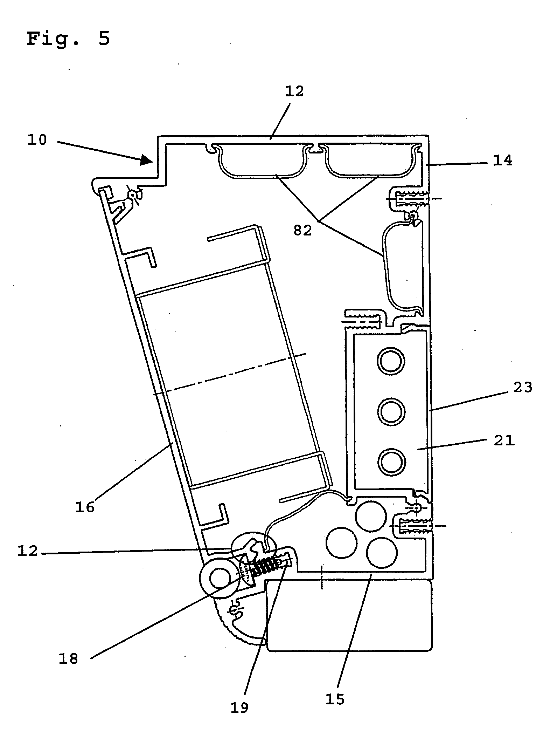

- Fig. 5: einen vergrößerten Querschnitt durch einen Versorgungsbalken der erfindungsgemäßen Versorgungsein- heit,
- Fig. 6: eine vergrößerte Seitenansicht eines erfindungsgemäßen Schwenkelementes, das als Infusionsflaschenhalter ausgebildet ist,
- Fig. 7: eine Draufsicht im Schnitt des Infusionsflaschenhalters gemäß Figur 6,
- Fig. 8: eine Seitenansicht eines Schwenkelementes, das als Gerätetragschiene zur Aufnahme von z. B. Katheterkörben und Bronchusabsaugungen ausgebildet ist,
- Fig. 9: eine Draufsicht im Schnitt der schwenkbaren Gerätetragschiene gemäß Figur 8,
- Fig. 10: eine vergrößerte Seitenansicht eines Schwenkelementes, das als Geräteträger ausgebildet ist,
- Fig. 11: eine Draufsicht im Schnitt des Schwenkelementes gemäß Figur 10 und
- Fig. 12: eine perspektivische Ansicht eines Abschnitts des Versorgungsbalkens gemäß Fig. 5.

Demnach besteht die erfindungsgemäße Versorgungseinheit im Wesentlichen aus zwei in einem Abstand zueinander befestigten Versorgungskanälen 10, 20 zur Medien- und Energieführung, die sich vertikal erstrecken. Diese Medien können beispielsweise Telefon- und Internetleitungen, technische Gase, Strom und dergleichen umfassen. Die Anschlusselemente zum Entnehmen der Medien sind entweder in den Versorgungskanälen 10, 20 selbst oder zwischen diesen angeordnet. Die Versorgungskanäle 10, 20 spannen zwischen sich einen Zwischenraum auf, in dem ein oder mehrere Möbelelemente angeordnet sind. Jeder Versorgungskanal 10, 20 besteht aus einem vorzugsweise stranggepressten Aluminiumkörper, der einen Wandschenkel 12 und einen sich quer von diesem nach vorne erstreckenden Seitenschenkel 14 aufweist; am vorderen Ende des Seitenschenkels 14 erstreckt sich ein Frontschenkel 15 parallel verlaufend zu dem Wandschenkel 12. Der Versorgungskanal 10, 20 ist durch eine Abdeckplatte 16 verschließbar, die an einem Ende in eine Aufnahme des Wandschenkels 12 eingreift und an dem Frontschenkel 15 zugewandten Ende einen Zentriereingriff 17 aufweist, der über eine in einen Schraubkanal 19 eingedrehte Schraube 18 an dem Frontschenkel 15 befestigbar ist.

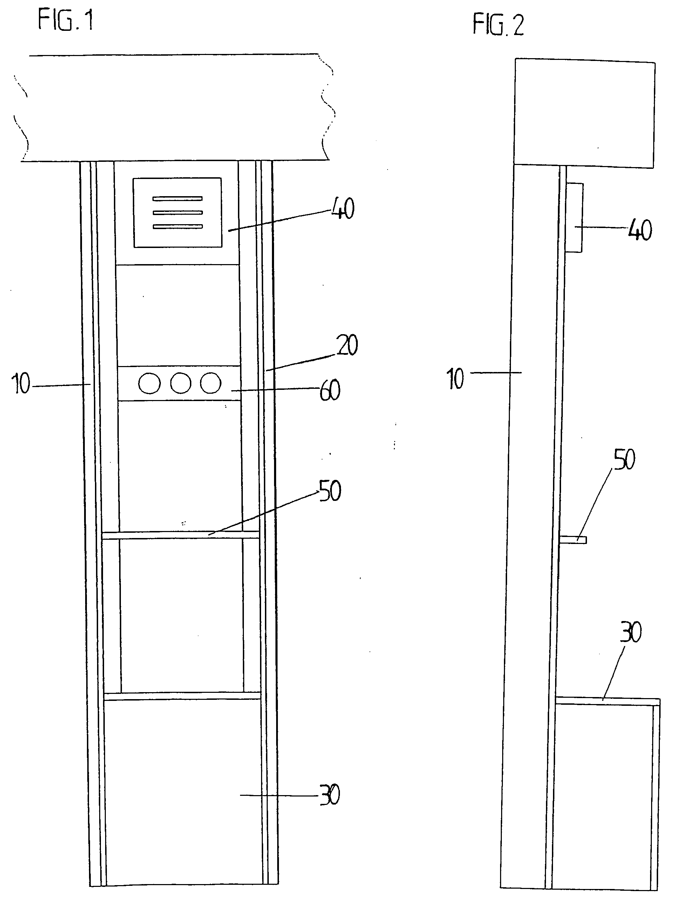

Bei der Ausführungsform in den Figuren 1 und 2 ist am unteren Ende zwischen den Versorgungskanälen 10, 20 ein Schrankelement 30 angeordnet, und am oberen Ende ein Lichtelement 40. Etwa in der Mitte ist ein Ablageelement 50 positioniert, und in der Mitte zwischen dem Ablageelement 50 und dem Lichtelement 40 sind eine Reihe von Gasanschlusselementen 60.

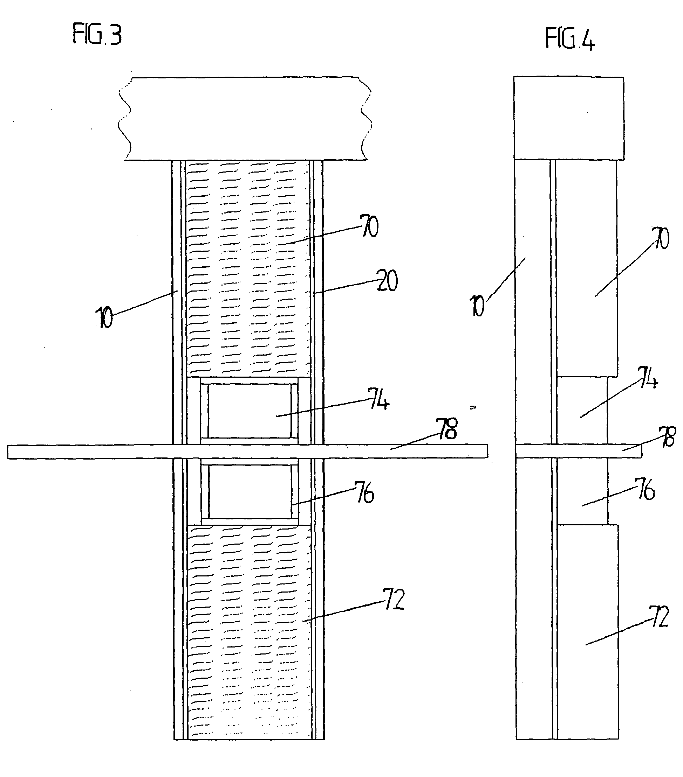

Bei der in den Figuren 3 und 4 dargestellten alternativen Ausführungsform sind zwei im Wesentlichen gleich große Schrankelemente 70 und 72 am jeweils oberen und unteren Ende angeordnet, und im Anschluss an diese jeweils zwei kastenförmige Ablageelemente 74, 76, zwischen denen ein hervorstehendes Plattenelement 78 angeordnet ist, das als Kreissegment ausgebildet ist.

Die Ausführungsformen in den Figuren 1 bis 4 stellen beispielhafte Ausführungsformen dar. Aus diesen Figuren wird der modulare Aufbau der erfindungsgemäßen Versorgungseinheit deutlich. Lediglich die beiden vertikalen Versorgungskanäle 10, 20 sind beiden Systemen gemein. Es kommt auf den jeweiligen Anwendungsfall an, welche Möbelelemente zwischen den Versorgungskanälen 10, 20 angeordnet werden. Die Ausgestaltung und die Anordnung der Möbelelemente sind vollkommen frei gestaltbar. Daneben können weitere Modulelemente zur Entnahme der Medien, wie z.B. das Gasanschlusselement 60 oder das Lichtelement 40, eingesetzt und mit den Leitungen in den Versorgungskanälen 10, 20 verbunden werden; vorzugsweise mittels leicht verbindbarer Steckverbindungen.

In die Versorgungskanäle 10, 20 kann beispielsweise eine Datendose eingeschnappt sein, wozu in der Abdeckplatte 16 eine entsprechende Aufnahme vorgesehen ist.

Zur Kabelführung innerhalb des Versorgungskanals 10 sind mehrere Abdeckkappen 82 in entsprechende an den Versorgungskanälen 10, 20 vorgesehene Hinterschnitte eingeschnappt. Daneben ist an den Seitenschenkeln 14 der Versorgungskanäle 10, 20 jeweils ein kastenförmiger Gaskanal 21 mit den Kupferrohren für die Gasversorgung ausgebildet, der durch eine Abdeckplatte 23 verschließbar ist.

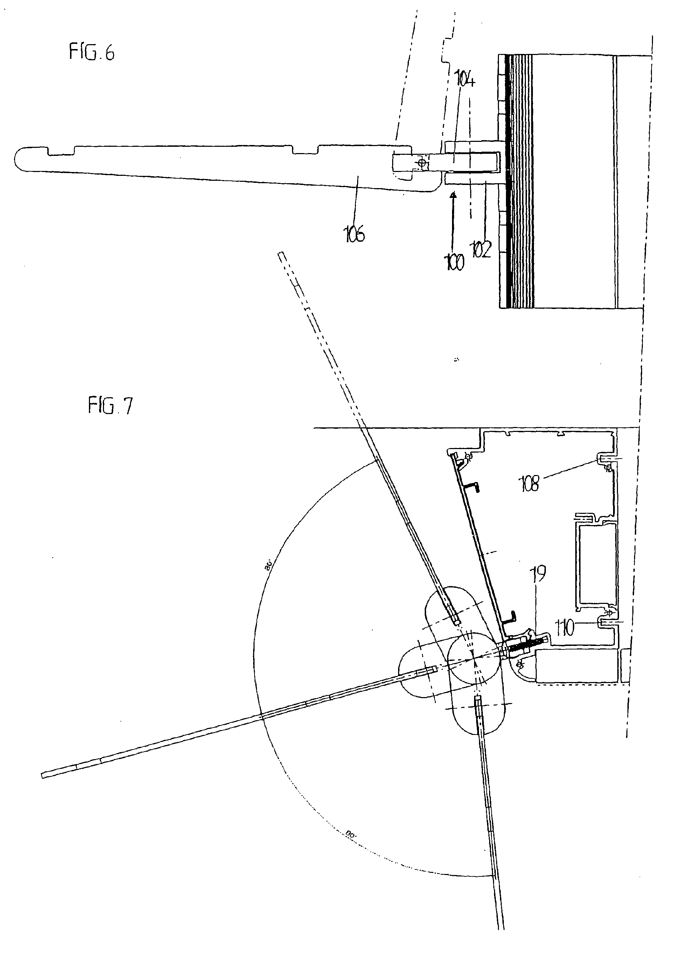

Die Figuren 6 bis 7 zeigen verschiedene Ausführungsformen des erfindungsgemäßen Schwenkelementes, mit denen die erfindungsgemäße Versorgungseinheit auf einfache Art und Weise nachgerüstet werden kann, um Gegenstände bedarfsgerecht an dieser zu befestigen. Das Schwenkelement 100 besteht aus einem in einen Schraubkanal 19 eines Versorgungskanals eingeschraubten Flansch 102, der in Einbaulage zwei zueinander beabstandete und parallel verlaufende Schenkel aufweist, zwischen denen ein Steg 104 drehbar angeordnet ist. Die Befestigung des Steges 104 an dem Flansch 102 erfolgt über einen bekannten Fixierbolzen. An dem Steg 104 wiederum ist ein Infusionsflaschenhalter 106 vertikal drehbar angelenkt. Dieser Infusionsflaschenhalter 106 kann durch die erfindungsgemäße Ausbildung somit vertikal und horizontal geschwenkt werden. Der Flansch 102 ist über eine in dem Grund der Schenkel eingelassene Schraube mit in den Schraubkanal 19 des Profilsegments 12 verbunden.

Darüber hinaus erfolgt die Befestigungstechnik der Möbelelemente an den Versorgungskanälen 10, 20 bei den Ausführungsformen der Figuren 6 bis 11 über Schrauben, die entsprechend an dem Versorgungskanal vorgesehene Schraubkanäle 108, 110 eingedreht sind. Die Verschraubung erfolgt von der Innenseite der Möbelelemente her, sodass die Verschraubung von außen nicht sichtbar ist.

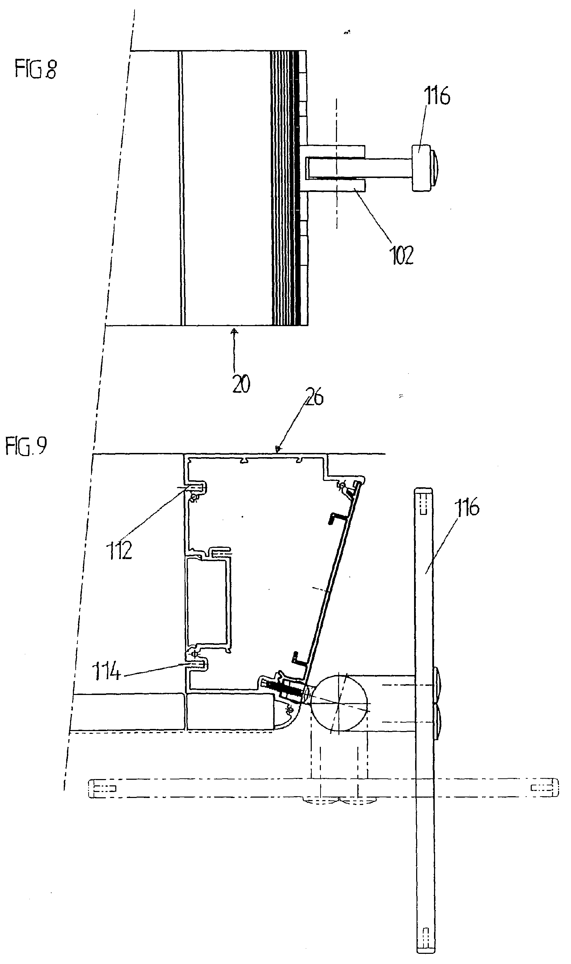

Auch bei der Ausführungsform in den Figuren 8 und 9 erfolgt die Verbindung der Möbelelemente mit dem Versorgungskanal 20 über derartige Schraubkanäle 112, 114. Bei der in diesen Figuren dargestellten Ausführungsform ist die Gerätetragschiene jedoch mit einer Stange 126 ausgebildet, die drehbar zwischen den Schenkeln des Flansches 102 befestigt ist. Auch dieser Flansch 102 ist über eine Schraube in den vorderen Schraubkanal des Versorgungskanals 20 eingeschraubt.

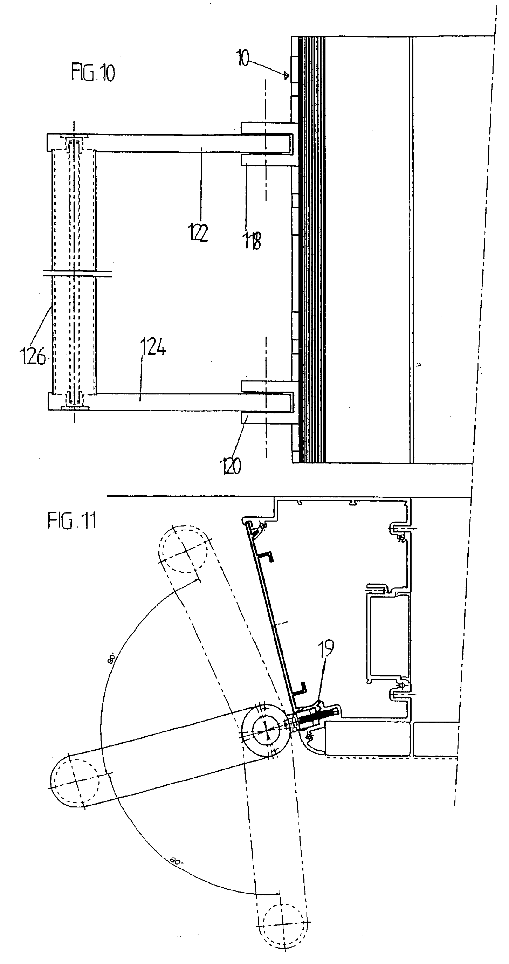

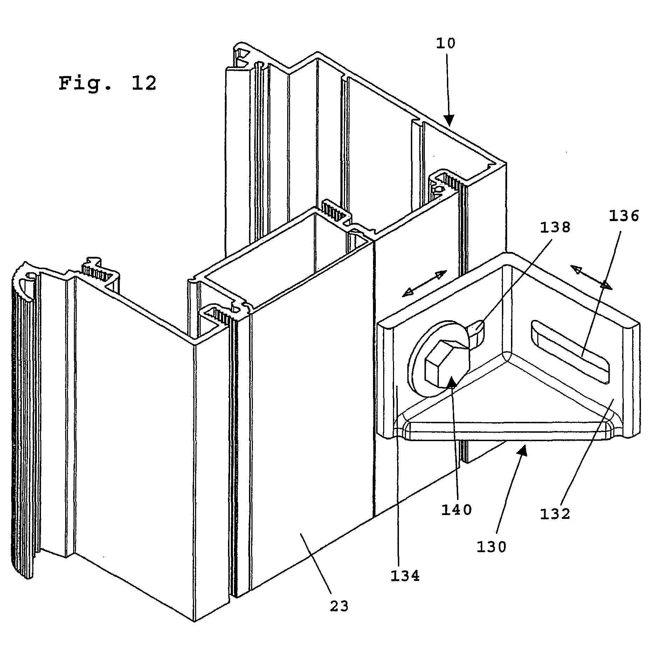

Die Figuren 10 und 11 zeigen eine Ausführungsform des Schwenkelementes als Geräteträger. Dieser Geräteträger ist über zwei Flansche 118 und 120 an der Vorderseite des Versorgungskanals 10 festgeschraubt, die vertikal voneinander beabstandet sind. In den Flanschen 118, 120 sind zwei Stege 122, 124 drehbar fixiert, die sich jeweils bis zu einem vorderen Befestigungsende erstrecken. Zwischen den vorderen Befestigungsenden ist eine rohrförmige Stange 126 vertikal verlaufend eingeschraubt, die als Geräteträger fungiert. Auch diese Flansche 118, 120 sind in den Schraubkanal 19 des Versorgungskanals 10 eingeschraubt.

Da sich der Schraubkanal 19 entlang der gesamten Länge der Versorgungskanäle 10, 20 erstreckt können die Flansche in jeder Höhe eingeschraubt werden, um die Schwenkelemente bedarfsgerecht zu fixieren.

Neben der direkten Verschraubung der Versorgungskanäle 10, 20 mit der Wand können diese auch mit dem in Fig. 12 dargestellten Wandbefestigungswinkel 130 an der Wand befestigt werden. Dieser Wandbefestigungswinkel 130 wird über einen Bolzen 140 außenseitig an die Versorgungskanäle 10, 20 angeschraubt, der aus einem Winkelprofil mit einem Wandschenkel 132 und einem Profilschenkel 134 besteht, die einen rechten Winkel zwischen sich einschließen. Der Wand- 132 und der Profilschenkel 134 sind jeweils mit Langlöchern 136, 138 versehen, um eine spannungsfreie Montage der Versorgungseinheit an der Wand zu ermöglichen. Da der Wandbefestigungswinkel 130 allseitig einstellbar ist, können Wandunebenheiten ausgeglichen werden, so dass keine Spannungen von der Kontaktfläche Wand/Profil auf die Versorgungskanäle 10, 20 übertragen werden.

### Bezugszeichenliste

- 10: Versorgungskanal
- 12: Wandschenkel
- 14: Seitenschenkel
- 15: Frontschenkel
- 16: Abdeckplatte
- 17: Zentriereingriff
- 18: Schraube
- 19: Schraubkanal
- 20: Versorgungskanal
- 21: Gaskanal
- 22: Zentriereingriff
- 23: Abdeckplatte
- 30: Schraubelement
- 40: Lichtelement
- 50: Ablageelement
- 60: Gasanschlusselement
- 70: Schrankelement
- 72: Schrankelement
- 74: Ablageelement
- 76: Ablageelement
- 78: Plattenelement
- 80: Datendose
- 82: Abdeckkappe

- 90: Stift
- 100: Schwenkelement
- 102: Flansch
- 104: Steg
- 106: Infusionsflaschenhalter
- 108: Schraubkanal
- 110: Schraubkanal
- 112: Schraubkanal
- 114: Schraubkanal
- 116: Gerätetragschiene
- 118: Flansch
- 120: Flansch
- 122: Steg
- 124: Steg
- 126: Stange
- 130: Wandbefestigungswinkel
- 132: Wandschenkel
- 134: Profilschenkel
- 136: Langloch
- 138: Langloch
- 140: Bolzen

## Patentansprüche

1. Versorgungseinheit mit zwei vertikal zueinander beabstandeten Versorgungskanälen (10, 20) zur Medien- und Energieführung, die Anschlusselemente aufnehmen und zwischen sich eine Zwischenraum aufspannen, und mindestens einem in dem Zwischenraum angeordneten Möbelelement, **DADURCH GEKENNZEICHNET, dass** verschiedene Möbelelemente modular in dem Zwischenraum lösbar anordenbar sind.

2. Versorgungseinheit nach Anspruch 1, **DADURCH GEKENNZEICHNET, dass** die Versorgungskanäle (10, 20) aus Profilen bestehen.

3. Versorgungseinheit nach Anspruch 2, **DADURCH GEKENNZEICHNET, dass** die Versorgungskanäle (10,20) aus Profilelementen modular zusammensetzbar sind.

4. Versorgungseinheit nach einem der vorhergehenden Ansprüche, **DADURCH GEKENNZEICHNET, dass** die Versorgungskanäle (10, 20) einen Schraubkanal (108, 110, 112, 114) zur Befestigung der Möbelelemente aufweisen.

5. Versorgungseinheit mit mindestens einem vertikal an einem Untergrund angeordneten Versorgungskanal (10, 20) zur Medien- und Energieführung, der Anschlusselemente aufnimmt, **DADURCH GEKENNZEICHNET, dass** dieser einen sich in Vertikalrichtung erstreckenden Schraubkanal (19) aufweist, an dem ein Schwenkelement befestigbar ist.

6. Versorgungseinheit nach Anspruch 5, **DADURCH GEKENNZEICHNET, dass** diese über einen Wandbefestigungswinkel (130) an einer Wand oder einem Untergrund befestigbar ist.

7. Versorgungseinheit nach Anspruch 5 oder 6, **DADURCH GEKENNZEICHNET, dass** das Schwenkelement einen Flansch (102, 118, 120) umfasst, in dem ein Steg (104, 122, 124) drehbar einsetzbar ist.

8. Versorgungseinheit nach einem der Ansprüche 5 bis 7, **DADURCH GEKENNZEICHNET, dass** das Schwenkelement als Geräteträger ausgebildet ist.

9. Versorgungseinheit nach einem der Ansprüche 5 bis 7, **DADURCH GEKENNZEICHNET, dass** das Schwenkelement als Infusionsflaschenhalter ausgebildet ist.

10. Versorgungseinheit nach einem der Ansprüche 5 bis 7, **DADURCH GEKENNZEICHNET, dass** das Schwenkelement als Geräteschiene ausgebildet ist.
